# EUROPÄISCHE PATENTSCHRIFT

(11) **EP 2 795 787 B1**
(45) Veröffentlichungstag und Bekanntmachung des Hinweises auf die Patenterteilung: **04.05.2016**
(21) Anmeldenummer: 12816025.6
(22) Anmeldetag: 11.12.2012
(51) Int. Cl.: H02P 6/00, C23F 13/04, C23F 13/06, H02K 3/44

(54) **REDUKTION VON ELEKTROLYTISCHER KORROSION IN EINEM BÜRSTENLOSEN GLEICHSTROMMOTOR**
REDUCTION OF ELECTROLYTIC CORROSION IN A BRUSHLESS DIRECT-CURRENT MOTOR
RÉDUCTION DE LA CORROSION ÉLECTROLYTIQUE DANS UN MOTEUR À COURANT CONTINU SANS BALAI

(30) Priorität: 21.12.2011 DE 102011089492
(43) Veröffentlichungstag der Anmeldung: 29.10.2014
(73) Patentinhaber: Robert Bosch GmbH, 70442 Stuttgart (DE)
(72) Erfinder: IMMENDOERFER, Ingo, 71732 Tamm (DE); RUEDINGER, Stefan, 70563 Stuttgart (DE); MATZKE, Markus, 70184 Stuttgart (DE)
(86) Internationale Anmeldenummer: PCT/EP2012/075063
(87) Internationale Veröffentlichungsnummer: WO 2013/092295

(56) Entgegenhaltungen:
- US-A- 4 211 625

## Beschreibung

### Stand der Technik

Elektromotoren werden in vielen Bereichen der Technik eingesetzt. Beispielsweise können Elektromotoren zum Antrieb von Pumpen verwendet werden. Befindet sich der Elektromotor dabei in einem elektrisch leitfähigen Medium, so kann eine Materialabtragung zwischen im leitfähigen Medium befindlichen und auf unterschiedlichen elektrischen Potentialen liegenden Komponenten auftreten. Dieser sogenannte Elektrolyseeffekt kann zu einem Materialabtrag von Schutzschichten im Elektromotor führen. Hierdurch können Kernmaterialien des Elektromotors freigelegt werden, die wiederum einer weiteren Materialabtragung durch den Elektrolyseeffekt und ferner einer Korrosion durch das leitfähige und korrosive Medium ausgesetzt sein.

Um den Elektrolyseeffekt zu verringern kann der elektrische Widerstand des leitfähigen Mediums erhöht werden, indem der Stromweg innerhalb des leitfähigen Mediums so beeinflusst wird, dass der Materialtransport im Medium verringert wird. Dies kann z.B. durch eine Verlängerung des wirksamen Stromwegs zwischen den auf unterschiedlichem Potential liegenden Komponenten durch Einbau von Hindernissen, wie z.B. Wandungen, geschehen. Ferner kann dies durch eine Verringerung des wirksamen Stromquerschnittes im leitfähigen Medium durch Einbau von schmalen Passagen, wie z.B. Abdichtungen, verwirklicht werden. Ferner kann der Elektrolyseeffekt dadurch verringert werden, dass eine zeitliche Unterbrechung der an den unterschiedlichen Komponenten anliegenden Spannung stattfindet. Auf diese Weise erfolgt ein lediglich eingeschränkter Stromfluss im leitfähigen Medium, so dass eine Materialabtragung verringert wird.

Bei einigen Anwendungen von Elektromotoren kann es sinnvoll sein, eine Potentialausgleichsleitung vorzusehen. Diese Leitung kann im zeitlichen Mittel betrachtet nicht auf das gleiche Potential, wie andere Komponenten des Elektromotors gelegt werden.

### Offenbarung der Erfindung

Es kann daher ein Bedarf an einer Verringerung eines Elektrolyseeffekts zwischen Komponenten eines Elektromotors und einer Potentialausgleichsleitung in einem elektrisch leitfähigen Medium bestehen.

Dieser Bedarf kann durch den Gegenstand der vorliegenden Erfindung gemäß den unabhängigen Ansprüchen gedeckt werden. Vorteilhafte Ausführungsformen der vorliegenden Erfindung sind in den abhängigen Ansprüchen beschrieben.

Im Folgenden werden Merkmale, Einzelheiten und mögliche Vorteile einer Vorrichtung gemäß Ausführungsformen der Erfindung im Detail diskutiert

Gemäß einem ersten Aspekt der Erfindung wird ein Steuergerät zur Verringerung von elektrolytischer Korrosion in einem bürstenlosen Gleichstrommotor vorgestellt. Das Steuergerät ist ausgeführt, Phasen des bürstenlosen Gleichstrommotors anzusteuern. Das Steuergerät weist einen Potentialausgleichsanschluss und eine Potentialausgleichsleitung auf. Die Potentialausgleichsleitung ist dabei ausgeführt, den bürstenlosen Gleichstrommotor mit dem Potentialausgleichsanschluss zu verbinden. An der Potentialausgleichsleitung ist ein Antikorrosionswiderstand vorgesehen, der ausgeführt ist, einen Stromfluss zwischen den Phasen des bürstenlosen Gleichstrommotors und der Potentialausgleichsleitung zu verringern.

Anders ausgedrückt basiert die Idee der vorliegenden Erfindung darauf, einen unerwünschten Stromfluss und damit verbundene Korrosionseffekte zwischen Komponenten des bürstenlosen Gleichstrommotors und einer Potentialausgleichsleitung dadurch zu minimieren, dass ein hochohmiger elektrischer Widerstand an der Potentialausgleichsleitung vorgesehen wird. Hochohmig bedeutet dabei, dass der elektrische Widerstand an der Potentialausgleichsleitung deutlich höher ist, als die übrigen im Elektromotor und im Steuergerät vorhandenen Widerstände. Insbesondere ist dieser Antikorrosionswiderstand höher als der virtuelle elektrische Widerstand des elektrisch leitfähigen Mediums, in dem die Potentialausgleichsleitung und der bürstenlose Gleichstrommotor angeordnet sind. Der Einsatz eines hochohmigen Widerstands ist dadurch möglich, dass die Potentialausgleichsleitung normalerweise keinen Strom führt. Auf diese Weise wird keine Funktionalität des Steuergeräts durch den hochohmigen Antikorrosionswiderstand beeinflusst bzw. eingeschränkt.

Somit können Elektrolyseeffekte zwischen den Phasen des bürstenlosen Gleichstrommotors und der Potentialausgleichsleitung effizient und kostengünstig erheblich reduziert werden. Ferner können durch das Vorsehen des Antikorrosionswiderstands Elektrolyseeffekte zwischen einer elektrischen Kontaktierung des bürstenlosen Gleichstrommotors, wie z.B. einer Steckverbindung, und einer elektrischen Kontaktierung zum Steuergerät, z.B. an einem Flansch eines Kraftstofftanks, verringert werden. Des Weiteren werden Elektrolyseeffekte zwischen einzelnen auf unterschiedlichen Potentialen liegenden Komponenten des Gleichstrommotors eingeschränkt.

Das Steuergerät kann z.B. zum Ansteuern eines Gleichstrommotors in einer elektrischen Förderpumpe, insbesondere in einer elektrischen Kraftstoffpumpe (EKP), eingesetzt werden. Die Kraftstoffpumpe kann eine Kraftstoffpumpe mit bürstenlosem Gleichstrommotor-Antrieb (brushless DC, BLDC) sein und zur Versorgung eines Verbrennungsmotors mit Kraftstoff dienen. Dabei kann die Kraftstoffpumpe zusammen mit dem Gleichstrommotor in einem Kraftstofftank angeordnet sein. Das Steuergerät kann außerhalb des Kraftstofftanks angeordnet sein und über einen Tankflansch mit der elektrischen Förderpumpe, und insbesondere mit dem bürstenlosen Gleichstrommotor elektrisch verbunden sein. Das Fördermedium der elektrischen Förderpumpe kann somit z.B. elektrisch leitfähiger Kraftstoff sein. Dieses Fördermedium kann den Gleichstrommotor und die Potentialausgleichsleitung zumindest teilweise umgeben.

Das Steuergerät ist dabei z.B. ein Steuergerät zum Ansteuern von Phasen bzw. Strängen des bürstenlosen Gleichstrommotors. Der bürstenlose Gleichstrommotor kann ein elektrisch kommutierter permanenterregter Drehstromsynchronmotor sein. Beispielsweise kann der Gleichstrommotor drei Phasen U, V, W aufweisen, die durch das Steuergerät in einem sogenannten 120°- Blockbetrieb angesteuert werden. Die Verwendung von bürstenlosen Gleichstrommotoren kann dabei vorteilhaft sein, da Elektrolyseeffekte bei bürstenlosen Gleichstrommotoren im Vergleich zu Motoren mit mechanischen Kommutierungssystemen erheblich verringert sind.

Der am Steuergerät vorgesehene Potentialausgleichsanschluss bietet zusammen mit der Potentialausgleichsleitung die Möglichkeit elektrische Potentiale von elektrisch leitfähigen Bauteilen, wie z.B. einem Gehäuse eines bürstenlosen Gleichstrommotors oder einem Gehäuse einer Elektrokraftstoffpumpe zu minimieren. Der Potentialausgleichsanschluss kann auch als Masse bezeichnet werden und kann z.B. dem Minuspol der Speisespannung des Steuergeräts entsprechen. Der Potentialausgleichsanschluss und die Potentialausgleichsleitung können auch als chassis ground (GND) bezeichnet werden.

Die Potentialausgleichsleitung kann dabei ferner die Funktion haben unkontrollierte elektrostatische Entladungen im Fördermedium zu verhindern. Diese Funktion wird als electro static discharge (ESD) Funktion bezeichnet. Ferner kann die Potentialausgleichsleitung die Funktion der Unterdrückung von unterwünschten elektrischen bzw. elektromagnetischen Wechselwirkungen zwischen dem bürstenlosen Gleichstrommotor und weiteren Komponenten z.B. eines Kraftfahrzeugs dienen. Diese Funktion wird als elektromagnetische Verträglichkeit (EMV) Funktion bezeichnet.

Der Antikorrosionswiderstand kann auch als Dämpfungswiderstand bezeichnet werden und ist ein elektrischer Widerstand, der an der Potentialausgleichsleitung vorgesehen ist. D.h. der Antikorrosionswiderstand ist mit der Potentialausgleichsleitung elektrisch verbunden oder direkt in diese integriert. Dabei verringert bzw. minimiert der Antikorrosionswiderstand einen Stromfluss in dem elektrisch leitfähigen Medium, in dem sich der Gleichstrommotor befindet. Dabei kann z.B. ein Stromfluss zwischen der Potentialausgleichsleitung und Phasen bzw. Phasenanschlussleitungen des bürstenlosen Gleichstrommotors verringert werden. Ferner kann ein Stromfluss zwischen weiteren Komponenten des Gleichstrommotors, die auf unterschiedlichen Potentialen liegen verringert werden.

Gemäß einem Ausführungsbeispiel der Erfindung weist die Potentialausgleichsleitung einen Leitungswiderstand auf. Dabei kann die Potentialausgleichsleitung z.B. aus Kupfer bestehen bzw. Kupfer aufweisen. Der Leitungswiderstand kann dabei deutlich unter 1 Ohm liegen. Z.B. kann der Leitungswiderstand im Bereich von Mikro- oder Milli-Ohm liegen. Der Antikorrosionswiderstand ist dabei erheblich bzw. deutlich größer als der Leitungswiderstand.

Gemäß einem weiteren Ausführungsbeispiel liegt der Antikorrosionswiderstand im Bereich zwischen 100 Kilo-Ohm und 1 Mega-Ohm. Vorzugsweise liegt der Antikorrosionswiderstand zwischen 150 und 500 Kilo-Ohm. Insbesondere kann sich der Antikorrosionswiderstand zwischen 200 und 300 Kilo-Ohm befinden. Dabei ist es vorteilhaft einen Antikorrosionswiderstand unter 1 Mega-Ohm zu wählen, um die oben erwähnte ESD-Funktionalität der Potentialausgleichsleitung nicht zu beeinflussen. Ferner kann es vorteilhaft sein einen Antikorrosionswiderstand einzusetzen, der um einen Faktor 30 bis 50 größer ist als ein Widerstand, der zwischen den Phasen des Gleichstrommotors und der Potentialausgleichsleitung im elektrisch leitfähigen Medium auftritt. Dabei kann dieser im elektrisch leitfähigen Medium auftretende Widerstand ca. 5 bis 15 Kilo-Ohm betragen.

Gemäß einem weiteren Ausführungsbeispiel weist das Steuergerät ferner mindestens einen Kondensator an der Potentialausgleichsleitung auf. Der Kondensator ist dabei, derart parallel zum Antikorrosionswiderstand geschaltet bzw. angeordnet, dass ein hochfrequentes Störsignal aus der Potentialausgleichsleitung ausgekoppelt wird. Durch das Vorsehen des Kondensators wird die oben beschriebene EMV-Funktionalität der Potentialausgleichsleitung gewährleistet. Der Kondensator kann auch als EVM-Bypass-Kapazität bezeichnet werden. Dabei kann der Kondensator zusammen mit dem Antikorrosionswiderstand als Tiefpassfilter wirken, so dass elektrische Signale in der Potentialausgleichsleitung, die eine hohe Frequenz haben, abgeschwächt werden. Beispielsweise kann der Kondensator an einem Fußpunkt der Potentialausgleichsleitung im Steuergerät elektrisch verbunden sein. Der Kondensator kann insbesondere ein niederinduktiver Kondensator sein. Die Kapazität des Kondensators kann z.B. im Wertebereich zwischen 1 und 100 Nano-Farad liegen. Vorteilhaft kann dieser Kondensator als Keramikkondensator ausgeführt sein.

Ferner können weitere ggf. komplexe Schaltungen vorgesehen sein, die dem gleichen Zweck dienen. Beispielsweise können mehrere weitere Kondensatoren, elektrische Widerstände und Induktivitäten an der Potentialausgleichsleitung vorgesehen sein.

Gemäß einem zweiten Aspekt der Erfindung wird ein System zur Verringerung von elektrolytischer Korrosion in einem bürstenlosen Gleichstrommotor vorgestellt. Das System weist ein oben beschriebenes Steuergerät und eine elektrische Förderpumpe auf. In die Förderpumpe ist ein bürstenloser Gleichstrommotor integriert. D.h. die Förderpumpe wirkt mit dem Gleichstrommotor zusammen bzw. wird mittels des Gleichstrommotors angetrieben. Die Potentialausgleichsleitung verbindet dabei die elektrische Förderpumpe bzw. das Gehäuse der Förderpumpe mit dem Potentialausgleichsanschluss.

Gemäß einem weiteren Ausführungsbeispiel der Erfindung ist die elektrische Förderpumpe ausgeführt, ein elektrisch leitfähiges Fördermedium zu fördern. Das Fördermedium kann z.B. elektrisch leitfähiger Kraftstoff sein. Beispielsweise kann der Kraftstoff z.B. Verunreinigungen aufweisen. Insbesondere kann der Kraftstoff ethanolhaltig sein. Dieser Kraftstoff kann als "bad fuel" bezeichnet werden. Das Fördermedium weist dabei einen, z.B. virtuellen, Fördermediumwiderstand zwischen den Phasen des bürstenlosen Gleichstrommotors und der Potentialausgleichsleitung auf. Der Antikorrosionswiderstand ist in Serie zu diesem Fördermediumwiderstand geschaltet bzw. im Steuergerät angeordnet. Anders ausgedrückt ist der Antikorrosionswiderstand als Längswiderstand in Bezug zu dem Fördermediumwiderstand ausgeführt.

Gemäß einem weiteren Ausführungsbeispiel der Erfindung ist der Antikorrosionswiderstand im Steuergerät angeordnet. Alternativ kann der Antikorrosionswiderstand an einem Flansch, insbesondere einem Tankflansch angeordnet sein. Der Tankflansch kann z.B. an einem Kraftstofftank zwischen elektrischer Förderpumpe und Steuergerät angeordnet sein. Gemäß einem weiteren Ausführungsbeispiel der Erfindung ist die elektrische Förderpumpe als Elektrokraftstoffpumpe ausgeführt.

Gemäß einem dritten Aspekt der Erfindung wird ein Verfahren zur Herstellung eines oben beschriebenen Steuergeräts vorgestellt. Das Verfahren weist die folgenden Schritte auf: Bereitstellen eines Steuergeräts, das ausgeführt ist, Phasen eines bürstenlosen Gleichstrommotors anzusteuern; Bereitstellen eines Potentialausgleichsanschlusses am Steuergerät; Bereitstellen einer Potentialausgleichsleitung, die ausgeführt ist den bürstenlosen Gleichstrommotor mit dem Potentialausgleichsanschluss zu verbinden; Vorsehen eines Antikorrosionswiderstands an der Potentialausgleichsleitung. Der Antikorrosionswiderstand ist dabei ausgeführt, einen Stromfluss zwischen den Phasen des bürstenlosen Gleichstrommotors und der Potentialausgleichsleitung zu verringern.

Weitere Merkmale und Vorteile der vorliegenden Erfindung werden dem Fachmann aus der nachfolgenden Beschreibung beispielhafter Ausführungsformen, die jedoch nicht als die Erfindung beschränkend auszulegen sind, unter Bezugnahme auf die beigelegten Zeichnungen ersichtlich.
- Fig. 1: zeigt einen im elektrisch leitfähigen Medium stattfindenden Elektrolyseeffekt
- Fig. 2: zeigt Steuersignale für die Ansteuerung von Phasen eines bürstenlosen Gleichstrommotors
- Fig. 3: zeigt einen Potentialverlauf zwischen einer Potentialausgleichsleitung und einer Phase eines bürstenlosen Gleichstrommotors bei 120°-Blockbetrieb
- Fig. 4: zeigt ein System mit Steuergerät und bürstenlosem Gleichstrommotor gemäß einem Ausführungsbeispiel der Erfindung

Alle Figuren sind lediglich schematische Darstellungen erfindungsgemäßer Vorrichtungen bzw. ihrer Bestandteile gemäß Ausführungsbeispielen der Erfindung. Insbesondere Abstände und Größenrelationen sind in den Figuren nicht maßstabsgetreu wiedergegeben. In den verschiedenen Figuren sind sich entsprechende Elemente mit den gleichen Referenznummern versehen.

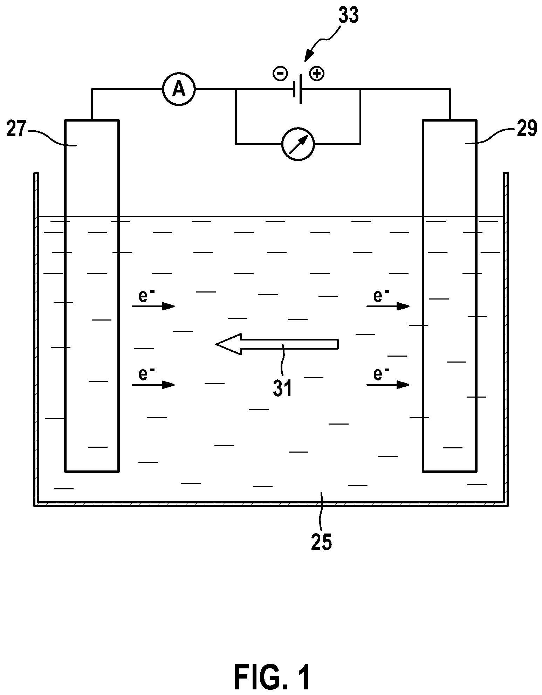

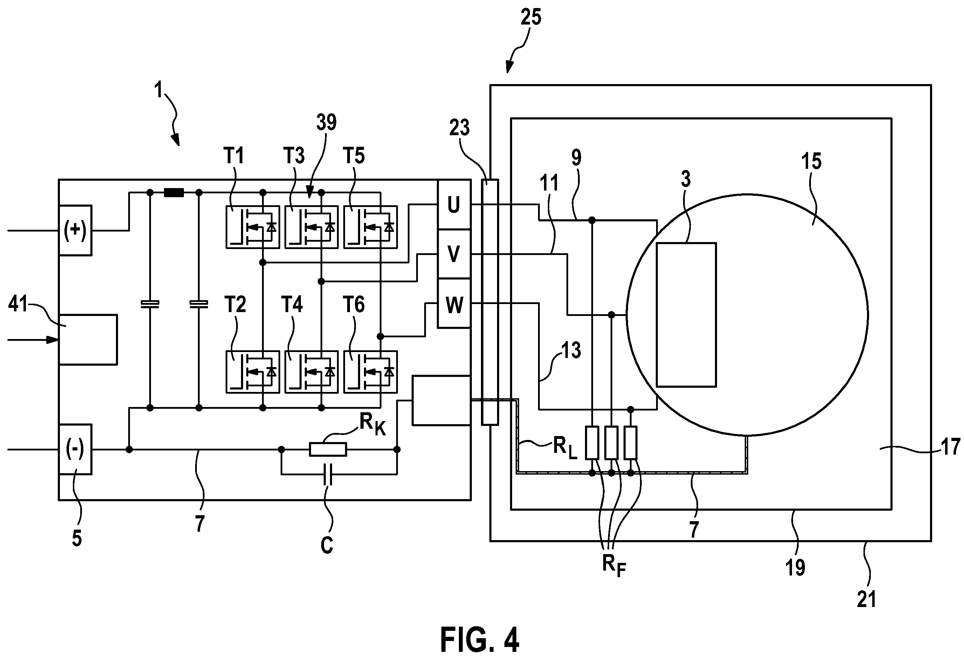

In den Fig. ist das Steuergerät 1 und das System 25 am Beispiel einer Elektrokraftstoffpumpe mit BLDC-Betrieb dargestellt. Die Elektrokraftstoffpumpe und damit auch der bürstenlose Gleichstrommotor 3 befinden sich dabei im Kraftstoff. Die Lebensdauer der Elektrokraftstoffpumpe kann von der Kraftstoffqualität abhängen. In korrosiven und leitfähigen Kraftstoffen kann dabei ein Elektrolyseeffekt zwischen Komponenten, die auf unterschiedlichen Potentialen, d.h. auf unterschiedlichen Spannungen liegen, auftreten. Diese Komponenten können Bauteile des Elektromotors sein. Fig. 1 zeigt schematisch das Auftreten eines Elektrolyseeffekts bzw. einer Materialabtragung und Korrosion 31 in einem elektrisch leitfähigen Medium 25. Hierbei liegt eine Spannung einer Spannungsquelle 33 zwischen einer Anode 29 und einer Kathode 27 an. Wie in Fig. 4 ersichtlich kann dabei eine erste Phase 9 des bürstenlosen Gleichstrommotors als Anode 29 und eine Potentialleitung 7 als Kathode 27 fungieren. Dabei kann Material von der Anode 29 abgetragen und an der Kathode 27 angelagert werden.

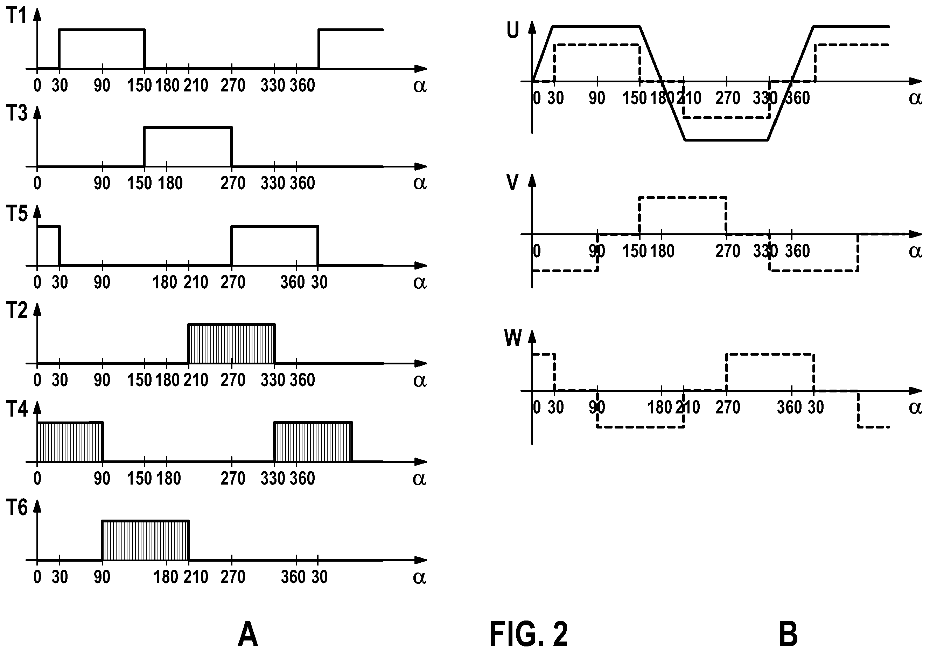

Dieser Elektrolyseeffekt tritt z.B. auf, wenn zwischen den Komponenten über längere Zeiträume ein Potentialgefälle existiert. Dies bringt einen Strom im elektrisch leitfähigen Medium und damit einen Materialabtrag mit sich. Beim bürstenlosen Gleichstrommotor 3 liegen in der Regel zwischen den einzelnen Phasen bzw. Phasenanschlüssen U, V, W reine Wechselpotentiale an. Im zeitlichen Mittel betrachtet ist der Elektrolyseeffekt und die damit verbundene Korrosion zwischen den Phasenanschlüssen sehr gering. Fig. 2 zeigt z.B. Steuersignale eines Steuergeräts 1 für die Ansteuerung von Phasen 9, 11, 13 eines bürstenlosen Gleichstrommotors 3 im 120°-Blockbetrieb. Dabei sind in Fig. 2A Signale der Endstufentransistoren T1, T2, T3, T4, T5 und T6 eines 120° B6-Wechselrichters 39 dargestellt. In Fig. 2B sind Hüllkurven der Strangströme des 120° B6-Wechselrichters 39 gezeigt. Auf der x-Achse ist jeweils ein elektrischer Winkel α und auf der y-Achse eine Spannung bzw. ein Strom dargestellt. In Fig. 2B stellt die gestrichelte Kurve einen Strom und die durchgehende Kurve eine Polradspannung dar. Aus Fig. 2 ist ersichtlich, dass die Ströme bzw. die Potentialunterschiede zwischen den einzelnen Phasen 9, 11, 13 bzw. U, V, W im zeitlichen Mittel etwa Null betragen bzw. sehr gering sind.

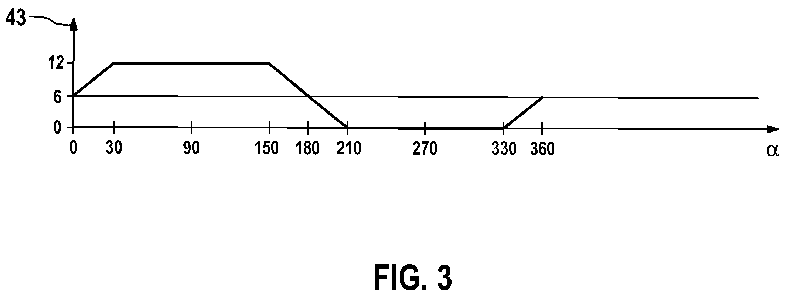

Allerdings bleibt auch im zeitlichen Mittel betrachtet eine Potentialdifferenz zwischen einer Potentialausgleichsleitung 7 und den einzelnen Phasen 9, 11, 13 bestehen. Dies ist z.B. in Fig. 3 verdeutlicht. Fig. 3 zeigt eine Hüllkurve einer zwischen der ersten Phase 9 bzw. U und einer Potentialausgleichsleitung 7 bestehenden Spannung 43. Für eine zweite Phase 11 bzw. V und eine dritte Phase 13 bzw. W treten phasenverschoben die gleichen Spannungsdifferenzen zur Potentialausgleichsleitung 7 auf. Mögliche Effekte einer Taktung sind dabei vernachlässigt. Auf der x-Achse von Fig. 3 ist der elektrische Winkel α und auf der y-Achse eine Spannung 43 in Volt aufgetragen. Im zeitlichen Mittel ergibt sich im Beispiel von Fig. 3 eine Spannung von 6 Volt zwischen der ersten Phase 9 und einer Potentialausgleichsleitung 7.

Um den aus dieser Spannung resultierenden Elektrolyseeffekt zu vermeiden, ist wie in Fig. 4 gezeigt ein hochohmiger Antikorrosionswiderstand R_{K} in der Potentialausgleichsleitung 7 vorgesehen. Dieser ist in Serie zu den im elektrisch leitfähigen Medium 17 auftretenden Fördermedienwiderständen R_{F} geschaltet und verringert elektrische Ströme zwischen den Phasen 9, 11, 13 und der Potentialausgleichsleitung 7 erheblich.

Die zwischen den Phasen 9, 11, 13 und der Potentialausgleichsleitung 7 auftretenden Fördermedienwiderstände R_{F} können z.B. zwischen 5 und 15 Kilo-Ohm liegen. Um den Elektrolyseeffekt signifikant zu verringern, kann der Antikorrosionswiderstand R_{K} um einen Faktor 30 bis 50 höher sein als der Fördermedienwiderstand R_{F}. Beispielsweise kann der Antikorrosionswiderstand R_{K} zwischen 100 und 500 Kilo-Ohm betragen. Der Antikorrosionswiderstand R_{K} ist dabei im Beispiel der Fig. 4 im Steuergerät 1 direkt in die ansonsten nichtstromführende Potentialausgleichsleitung 7 eingefügt. Die Potentialausgleichsleitung 7 behält trotz dieser hochohmigen Beschaltung ihre ESD-Funktionalität bei, da der Antikorrosionswiderstand R_{K} kleiner als 1 Mega-Ohm ist. Ferner wird um eine EMV-Funktionalität zu gewährleisten ein mögliches hochfrequentes Störsignal vor dem Antikorrosionswiderstand R_{K} in der Potentialausgleichsleitung 7 niederinduktiv ausgekoppelt. Hierzu ist ein niederinduktiver Kondensator C im Steuergerät 1 eingesetzt. Im Ausführungsbeispiel in Fig. 4 ist der Fußpunkt des Kondensators C beispielhaft an die Potentialausgleichsleitung 7 angeschlossen. Alternativ kann die Potentialausgleichsleitung 7 mit weiteren geeigneten Punkten bzw. Komponenten im Steuergerät 1 hochfrequent verbunden sein.

Im Detail weist das in Fig. 4 gezeigte System 25 ein Steuergerät 1 und eine durch einen bürstenlosen Gleichstrommotor 3 angetriebene elektrische Förderpumpe 15 auf. Die elektrische Förderpumpe 15 ist eine EKP und befindet sich in einem Kraftstofffördermodul 19 in einem Kraftstofftank 21. Das elektrisch leitfähige Fördermedium 17, nämlich Kraftstoff, umspült dabei den bürstenlosen Gleichstrommotor 3. Das Gehäuse der elektrische Förderpumpe 15 und damit auch der bürstenlose Gleichstrommotor 3 sind über eine Potentialausgleichsleitung 7 mit einem Potentialausgleichsanschluss 5 am Steuergerät 1 elektrisch verbunden.

Der bürstenlose Gleichstrommotor 3 weist drei Phasen 9, 11, 13 auf, die über Phasenanschlüsse U, V, W mit dem Steuergerät 1 verbunden sind. Das Steuergerät 1 ist dabei außerhalb des Kraftstofftanks 21 angeordnet. Die Phasenanschlüsse U, V, W und die Potentialausgleichsleitung 7 sind über einen Flansch 23 aus dem Kraftstofftank 21 zum Steuergerät 1 geführt. Das Steuergerät 1 weist dabei einen B6-Wechselrichter 39 mit sechs Haupttransistoren T1, T2, T3, T4, T5 und T6 auf. Ferner weist das Steuergerät einen Anschluss an eine Energiequelle, wie z.B. an eine Batterie (+, -) auf. Des Weiteren ist ein Pulsweitenmodulator 41 im Steuergerät 1 vorgesehen. Die Potentialausgleichsleitung 7 weist einen Leitungswiderstand R_{L} auf, der erheblich kleiner ist als der Antikorrosionswiderstand R_{K}. Innerhalb des Steuergeräts 1 kann die Potentialausgleichsleitung 7 auch als Groundschiene bezeichnet werden.

Ein durch Elektrolyse im leitfähigen Fördermedium 17 möglicher Stromkreis könnte folgendermaßen aussehen: ein elektrische Strom verläuft vom Pluspol bzw. (+)-Klemme des Steuergeräts 1 über den B6-Brückenwechselrichter 39 zum Phasenanschluss U, V oder W. Ferner fließt der elektrische Strom durch den im leitfähigen Fördermedium 17 gebildeten Fördermediumwiderstand R_{F} zur Potentialausgleichsleitung 7 und Groundschiene des Steuergeräts 1 und von dort über den Antikorrosionswiderstand R_{K} zum Minuspol bzw. zur (-)-Klemme des Steuergeräts 1.

Abschließend wird angemerkt, dass Ausdrücke wie "aufweisend" oder ähnliche nicht ausschließen sollen, dass weitere Elemente oder Schritte vorgesehen sein können. Des Weiteren sei darauf hingewiesen, dass "eine" oder "ein" keine Vielzahl ausschließen. Außerdem können in Verbindung mit den verschiedenen Ausführungsformen beschriebene Merkmale beliebig miteinander kombiniert werden. Es wird ferner angemerkt, dass die Bezugszeichen in den Ansprüchen nicht als den Umfang der Ansprüche beschränkend ausgelegt werden sollen.

## Patentansprüche

1. Steuergerät (1) zur Verringerung von elektrolytischer Korrosion in einem bürstenlosen Gleichstrommotor (3), das Steuergerät (1) aufweisend einen Potentialausgleichsanschluss (5);
eine Potentialausgleichsleitung (7), die ausgeführt ist einen bürstenlosen Gleichstrommotor (3) mit dem Potentialausgleichsanschluss (5) zu verbinden;
wobei das Steuergerät (1) ausgeführt ist, Phasen (9, 11, 13) des bürstenlosen Gleichstrommotors (3) anzusteuern;
**dadurch gekennzeichnet, dass**
an der Potentialausgleichsleitung (7) ein Antikorrosionswiderstand (R_{K}) vorgesehen ist, der ausgeführt ist, einen Stromfluss zwischen den Phasen (9, 11, 13) des bürstenlosen Gleichstrommotors (3) und der Potentialausgleichsleitung (7) zu verringern.

2. Steuergerät (1) gemäß Anspruch 1,
wobei die Potentialausgleichsleitung (7) einen Leitungswiderstand (R_{L}) aufweist;
wobei der Antikorrosionswiderstand (R_{K}) größer ist als der Leitungswiderstand (R_{L}).

3. Steuergerät (1) gemäß einem der Ansprüche 1 und 2,
wobei der Antikorrosionswiderstand (R_{K}) im Bereich zwischen 100 Kilo-Ohm und 1 Mega-Ohm liegt.

4. Steuergerät (1) gemäß einem der Ansprüche 1 bis 3,
ferner aufweisend einen Kondensator (C), der derart parallel zum Antikorrosionswiderstand (R_{K}) geschaltet ist, dass ein hochfrequentes Störsignal aus der Potentialausgleichsleitung (7) ausgekoppelt wird.

5. System (25) zur Verringerung von elektrolytischer Korrosion in einem bürstenlosen Gleichstrommotor (3), das System (25) aufweisend ein Steuergerät (1) gemäß einem der Ansprüche 1 bis 4,
eine elektrische Förderpumpe (15), in die der bürstenlose Gleichstrommotor (3) integriert ist;
wobei eine Potentialausgleichsleitung (7) die elektrische Förderpumpe (15) mit dem Potentialausgleichsanschluss (5) verbindet.

6. System (25) gemäß Anspruch 5,
wobei ein elektrisch leitfähiges Fördermedium (17) der elektrischen Förderpumpe (15) einen Fördermediumwiderstand (R_{F}) zwischen den Phasen (9, 11, 13) und der Potentialausgleichsleitung (7) aufweist; wobei der Antikorrosionswiderstand (R_{K}) in Serie zum Fördermediumwiderstand (R_{F}) geschaltet ist.

7. System (25) gemäß einem der Ansprüche 5 und 6,
wobei der Antikorrosionswiderstand (R_{K}) im Steuergerät (1) oder an einem Flansch (23) zwischen der elektrischen Förderpumpe (R_{F}) und dem Steuergerät (1) angeordnet ist.

8. System (25) gemäß einem der Ansprüche 5 bis 7,
wobei die elektrische Förderpumpe (15) als Elektrokraftstoffpumpe ausgeführt ist.

9. Verfahren zur Herstellung eines Steuergeräts (1) gemäß einem der Ansprüche 1 bis 4, das Verfahren aufweisend die folgenden Schritte Bereitstellen eines Steuergeräts (1), das ausgeführt ist, Phasen (9, 11, 13) eines bürstenlosen Gleichstrommotors (3) anzusteuern;
Bereitstellen eines Potentialausgleichsanschlusses (5) am Steuergerät (1); Bereitstellen einer Potentialausgleichsleitung (7), die ausgeführt ist den bürstenlosen Gleichstrommotor (3) mit dem Potentialausgleichsanschluss (5) zu verbinden;
**dadurch gekennzeichnet, dass** das Verfahren ferner aufweist Vorsehen eines Antikorrosionswiderstands (R_{K}) an der Potentialausgleichsleitung (7);
wobei der Antikorrosionswiderstand (R_{K}) ausgeführt ist, einen Stromfluss zwischen den Phasen (9, 11, 13) des bürstenlosen Gleichstrommotors (3) und der Potentialausgleichsleitung (7) zu verringern.

## Claims

1. Control device (1) for reducing electrolytic corrosion in a brushless direct-current motor (3), the control device (1) having a potential equalization connection (5);
a potential equalization line (7) which is designed to connect a brushless direct-current motor (3) to the potential equalization connection (5);
wherein the control device (1) is designed to actuate phases (9, 11, 13) of the brushless direct-current motor (3);
**characterized in that**
an anticorrosion resistance (R_{K}) is provided on the potential equalization line (7), which anti-corrosion resistance (R_{K}) is designed to reduce a flow of current between the phases (9, 11, 13) of the brushless direct-current motor (3) and the potential equalization line.

2. Control device (1) according to Claim 1, wherein the potential equalization line (7) has a line resistance (R_{L});
wherein the anti-corrosion resistance (R_{K}) is larger than the line resistance (R_{L}).

3. Control device (1) according to one of Claims 1 and 2,
wherein the anti-corrosion resistance (R_{K}) is in the region between 100 kilo-ohms and one mega-ohm.

4. Control device (1) according to one of Claims 1 to 3,
also having a capacitor (C) which is connected in parallel with the anti-corrosion resistance (R_{K}) in such a way that a high-frequency interference signal is extracted from the potential equalization line (7).

5. System (25) for reducing electrolytic corrosion in a brushless direct-current motor (3), the system (25) having a control device (1) according to one of Claims 1 to 4,
an electric feed pump (15) into which the brushless direct-current motor (3) is integrated;
wherein a potential equalization line (7) connects the electric feed pump (15) to the potential equalization connection (5).

6. System (25) according to Claim 5,
wherein an electrically conductive feeding medium (17) of the electric feed pump (15) has a feeding medium resistance (R_{F}) between the phases (9, 11, 13) and the potential equalization line (7);
wherein the anti-corrosion resistance (R_{K}) is connected in series with the feeding medium resistance (R_{F}).

7. System (25) according to one of Claims 5 and 6, wherein the anti-corrosion resistance (R_{K}) is arranged in the control device (1) or on a flange (23) between the electric feed pump (R_{F}) and the control device (1).

8. System (25) according to one of Claims 5 to 7, wherein the electric feed pump (15) is embodied as an electric fuel pump.

9. Method for manufacturing a control device (1) according to one of Claims 1 to 4, the method having the following steps
provision of a control device (1) which is designed to actuate phases (9, 11, 13) of a brushless direct-current motor (3);
provision of a potential equalization connection (5) on the control device (1);
provision of a potential equalization line (7) which is designed to connect the brushless direct-current motor (3) to the potential equalization connection (5); **characterized in that** the method also has provision of an anti-corrosion resistance (R_{K}) on the potential equalization line (7);
wherein the anti-corrosion resistance (R_{K}) is designed to reduce a flow of current between the phases (9, 11, 13) of the brushless direct-current motor (3) and the potential equalization line (7).

## Revendications

1. Appareil de commande (1) destiné à réduire la corrosion électrolytique dans un moteur à courant continu sans balai (3), l'appareil de commande (1) comprenant
une borne de compensation de potentiel (5) ;
une ligne de compensation de potentiel (7) qui est conçue pour relier le moteur à courant continu sans balai (3) à la borne de compensation de potentiel (5) ; dans lequel l'appareil de commande (1) est conçu pour commander des phases (9, 11, 13) du moteur à courant continu sans balai (3) ;
**caractérisé en ce que**, sur la ligne de compensation de potentiel (7), il est prévu une résistance anticorrosion (R_{K}) qui est conçue pour réduire un flux de courant entre les phases (9, 11, 13) du moteur à courant continu sans balai (3) et la ligne de compensation de potentiel (7).

2. Appareil de commande (1) selon la revendication 1,
dans lequel la ligne de compensation de potentiel (7) comprend une résistance de conduction (R_{L}) ;
dans lequel la résistance anticorrosion (R_{K}) est supérieure à la résistance de conduction (R_{L}).

3. Appareil de commande (1) selon l'une quelconque des revendications 1 et 2,
dans lequel la résistance anticorrosion (R_{K}) se situe dans la gamme comprise entre 100 kohms et un mégohm.

4. Appareil de commande (1) selon l'une quelconque des revendications 1 à 3,
comprenant en outre un condensateur (C) qui est connecté en parallèle à la résistance anticorrosion (R_{K}) de manière à ce qu'un signal parasite à haute fréquence soit découplé de la ligne de compensation de potentiel (7).

5. Système (25) destiné à réduire la corrosion électrolytique dans un moteur à courant continu sans balai (3), le système (25) comprenant
un appareil de commande (1) selon l'une quelconque des revendications 1 à 4,
une pompe de refoulement électrique (15) dans laquelle est intégré le moteur à courant continu sans balai (3) ;
dans lequel la ligne de compensation de potentiel (7) relie la pompe de refoulement électrique (15) à la borne de compensation de potentiel (5).

6. Système (25) selon la revendication 5,
dans lequel un fluide de refoulement électriquement conducteur (17) de la pompe de refoulement électrique (15) comprend une résistance de fluide de refoulement (R_{F}) entre les phases (9, 11, 13) et la ligne de compensation de potentiel (7) ;
dans lequel la résistance anticorrosion (R_{K}) est connectée en série à la résistance de fluide de refoulement (R_{F}).

7. Système (25) selon l'une quelconque des revendication 5 et 6,
dans lequel la résistance anticorrosion (R_{K}) est disposée dans l'appareil de commande (1) ou sur une bride (23) entre la pompe de refoulement électrique (R_{F}) et l'appareil de commande (1).

8. Système (25) selon l'une quelconque des revendication 5 à 7,
dans lequel la pompe de refoulement électrique (15) est réalisée sous la forme d'une pompe à carburant électrique.

9. Procédé de fabrication d'un appareil de commande (1) selon l'une quelconque des revendication 1 à 4, le procédé comprenant les étapes consistant à :
prévoir un appareil de commande (1) qui est réalisé de manière à commander des phases (9, 11, 13) d'un moteur à courant continu sans balai (3) ;
prévoir une borne de compensation de potentiel (5) sur l'appareil de commande (1) ;
prévoir une ligne de compensation de potentiel (7) qui est conçue pour relier le moteur à courant continu sans balai (3) à la borne de compensation de potentiel (5) ;
**caractérisé en ce que** le procédé consiste en outre à :
prévoir une résistance anticorrosion (R_{K}) sur la ligne de compensation de potentiel (7) ;
dans lequel la résistance anticorrosion (R_{K}) est réalisée de manière à réduire un flux de courant entre les phases (9, 11, 13) du moteur à courant continu sans balai (3) et la ligne de compensation de potentiel (7).
